# EUROPÄISCHE PATENTANMELDUNG

(11) **EP 3 576 431 A1**
(43) Veröffentlichungstag der Anmeldung: **04.12.2019**
(21) Anmeldenummer: 19176818.3
(22) Anmeldetag: 27.05.2019
(51) Int. Cl.: H04R 19/00, H04R 17/00, B06B 1/06, B06B 1/02, G01S 15/08, H04M 1/03, H04M 1/725, H04R 1/22, H04R 3/14, G10K 9/12, G06F 3/01, G01S 15/87

(54) **VERFAHREN ZUM BETREIBEN EINER LAUTSPRECHEREINHEIT SOWIE EINE LAUTSPRECHEREINHEIT**

(30) Priorität: 01.06.2018 DE 102018113112
(71) Anmelder: Usound GmbH, 8020 Graz (AT)
(72) Erfinder: RUSCONI CLERICI BELTRAMI, Andrea, 1130 Wien (AT); BOTTONI, Ferruccio, 8020 Graz (AT)
(74) Vertreter: Bergmeier, Ulrich

(57) **Zusammenfassung**

Die Erfindung betrifft ein Verfahren zum Betreiben einer Lautsprechereinheit (1), insbesondere für ein tragbares Gerät, bei welchem mittels eines MEMS-Schallwandlers (2) der Lautsprechereinheit (1) Schallwellen (3, 4) im hörbaren Wellenlängenbereich erzeugt und/oder erfasst werden. Erfindungsgemäß wird der MEMS-Schallwandler (2) von einer Steuereinheit der Lautsprechereinheit zusätzlich als Ultraschallnäherungssensor (28) betrieben, wobei mit dem MEMS-Schallwandler (2) zum Messen eines Abstands (A) zwischen sich und einem Objekt (5) Ultraschallwellen (3, 4) erzeugt und erfasst werden. Außerdem betrifft die Erfindung eine Lautsprechereinheit (1), insbesondere für ein tragbares Gerät, mit einem MEMS-Schallwandler (2) zum Erzeugen und/oder Erfassen von Schallwellen im hörbaren Wellenlängenbereich. Erfindungsgemäß ist der MEMS-Schallwandler (2) derart ausgebildet, dass mit diesem zusätzlich Ultraschallwellen erzeugbar und erfassbar sind und dass die Lautsprechereinheit (1) eine Steuereinheit (29) aufweist, mittels der der MEMS-Schallwandler (2) nach einem oder mehreren der vorangegangenen Verfahrensansprüche als Ultraschallnäherungssensor (28) betreibbar ist.

## Beschreibung

Die vorliegende Erfindung betrifft ein Verfahren zum Betreiben einer Lautsprechereinheit, insbesondere für ein tragbares Gerät, bei welchem mittels eines MEMS-Schallwandlers der Lautsprechereinheit Schallwellen im hörbaren Wellenlängenbereich erzeugt und/oder erfasst werden. Außerdem betrifft die vorliegende Erfindung eine Lautsprechereinheit, insbesondere für ein tragbares Gerät, mit einem MEMS-Schallwandler zum Erzeugen und/oder Erfassen von Schallwellen im hörbaren Wellenlängenbereich.

Aus der DE 10 2015 114 245 A1 ist eine Lautsprecheranordnung mit einem MEMS-Schallwandler zum Erzeugen und/oder Erfassen von Schallwellen im hörbaren Wellenlängenspektrum bekannt.

Aufgabe der vorliegenden Erfindung ist es somit, den Stand der Technik zu verbessern.

Die Aufgabe wird gelöst durch ein Verfahren zum Betreiben einer Lautsprechereinheit sowie eine Lautsprechereinheit mit den Merkmalen der unabhängigen Patentansprüche.

Vorgeschlagen wird ein Verfahren zum Betreiben einer Lautsprechereinheit, wobei die Lautsprechereinheit beispielsweise in einem tragbaren Gerät angeordnet sein kann. Das tragbare Gerät kann beispielsweise ein Smartphone, ein Tablet, Laptop oder ähnliches sein, mit dem beispielsweise Musik, Töne und/oder Sprache erzeugt werden kann. Beim Verfahren werden mittels eines MEMS-Schallwandlers der Lautsprechereinheit Schallwellen im hörbaren Wellenlängenbereich erzeugt. Der hörbare Wellenlängenbereich für das menschliche Gehör beginnt bei etwa 20 Hz im unteren Bereich und reicht bis etwa 20 kHz im oberen Bereich. Schallwellen, die eine niedrigere bzw. eine höhere Frequenz aufweisen, können vom menschlichen Gehör nicht wahrgenommen werden. Die Abkürzung MEMS steht dabei für mikroelektromechanische Systeme. Der MEMS-Schallwandler kann somit als Lautsprecher benutzt werden. Zusätzlich oder alternativ können beim Verfahren mittels des MEMS-Schallwandlers auch Schallwellen im hörbaren Wellenlängenbereich erfasst werden. Der MEMS-Schallwandler kann somit als Mikrofon benutzt werden.

Erfindungsgemäß wird der MEMS-Schallwandler von einer Steuereinheit der Lautsprechereinheit zusätzlich als Ultraschallnäherungssensor betrieben. Der MEMS-Schallwandler kann somit zum Erzeugen und/oder zum Erfassen von Schallwellen im hörbaren Wellenlängenbereich und als Ultraschallnäherungssensor betrieben werden. Durch die Verwendung nur eines MEMS-Schallwandlers kann die Lautsprechereinheit platzsparender und kostengünstiger ausgebildet werden.

Bei dem Verfahren werden mit dem MEMS-Schallwandler zum Messen eines Abstands zwischen sich und einem Objekt Ultraschallwellen erzeugt und erfasst. Die Lautsprechereinheit kann mit Hilfe des MEMS-Schallwandlers als Ultraschallnäherungssensor den Abstand beispielsweise dadurch messen, dass ein Testsignal aus Ultraschallwellen ausgesandt wird. An einem vor dem MEMS-Schallwandler angeordneten Objekt wird das Testsignal aus Ultraschallwellen reflektiert und zumindest ein Teil des Testsignals gelangt zum MEMS-Schallwandler zurück, durch den es erfasst wird. Aus der Zeit zwischen dem Aussenden und dem Erfassen des Testsignals kann der Abstand zwischen dem MEMS-Schallwandler und dem Objekt ermittelt werden. Durch die Abstandsmessung können beispielsweise Abschaltfunktion und/oder Aufwachfunktionen realisiert werden. Wird die Lautsprechereinheit bzw. das tragbare Gerät mit der Lautsprechereinheit angefasst bzw. nähert sich die Hand, kann dies durch die Abstandsmessung zwischen der Hand und der Lautsprechereinheit bzw. des tragbare Geräts ermittelt werden. Das tragbare Gerät kann daraufhin aktiviert werden, so dass der Benutzer das Gerät sofort benutzen kann. Legt der Benutzer das Gerät wieder aus der Hand, kann dies durch die Abstandsmessung ermittelt werden und das Gerät kann wieder abgeschaltet werden.

Da die Abstandsmessung mit Hilfe der Ultraschallwellen durchgeführt wird, wird die Musik, der Ton und/oder die Sprache nicht beeinträchtigt, da die Ultraschallwellen für das menschliche Gehör nicht wahrnehmbar sind. Mit der Lautsprechereinheit kann somit beispielsweise Musik gehört werden, wobei gleichzeitig, ohne das der Benutzer es merkt, der Abstand zum Objekt gemessen wird.

In einer vorteilhaften Weiterentwicklung der Erfindung wird während eines Lautsprecherintervalls der MEMS-Schallwandler als Lautsprecher betrieben. Das Lautsprecherintervall ist dabei ein zeitliches Intervall, währenddessen der MEMS-Schallwandler als Lautsprecher betrieben wird. Es werden somit im Lautsprecherintervall Schallwellen erzeugt.

Zusätzlich oder alternativ wird während eines zum Lautsprecherintervall zeitversetzten Mikrofonintervalls der MEMS-Schallwandler als Mikrofon betrieben. Das Mikrofonintervall ist ein zeitliches Intervall, währenddessen der MEMS-Schallwandler als Mikrofon betrieben wird. Es können somit Schallwellen erfasst werden. Das Mikrofonintervall kann dabei beispielsweise zeitlich vor dem Lautsprecherintervall angeordnet sein, so dass zuerst die Schallwellen erfasst werden können und darauffolgend während dem Lautsprecherintervall erzeugt werden. Zusätzlich oder alternativ kann das Mikrofonintervall auch zeitlich nach dem Lautsprecherintervall angeordnet sein, so dass zuerst die Schallwellen erzeugt werden und darauffolgend Schallwellen erfasst werden. Die Schallwellen können dabei das Testsignal umfassen, die während des Lautsprecherintervalls erzeugt werden. Während des Mikrofonintervalls können die Schallwellen erfasst werden, die das reflektierte Testsignal umfassen. Aus einer Zeitdifferenz zwischen Erzeugen und Erfassen des Testsignals kann der Abstand zwischen MEMS-Schallwandler und Objekt ermittelt werden.

Durch die zeitliche Trennung des Lautsprecherintervalls, in dem die Schallwellen erzeugt werden, und dem Mikrofonintervall, in dem die Schallwellen erfasst werden, kann der MEMS-Schallwandler mit einer höheren Tonqualität die Schallwellen erzeugen und erfassen.

Vorteilhafterweise können sich das Lautsprecherintervall und das Mikrofonintervall abwechseln. Dadurch kann mehrmals der Abstand zwischen dem MEMS-Schallwandler und dem Objekt gemessen werden, was beispielsweise dann vorteilhaft ist, wenn sich der Abstand zwischen MEMS-Schallwandler und Objekt ändert, so dass eine Abstandsänderung gemessen werden kann.

Von Vorteil ist es, wenn während des Lautsprecherintervalls in einem Klangintervall der MEMS-Schallwandler die hörbaren Schallwellen erzeugt. In dem Klangintervall kann der MEMS-Schallwandler somit beispielsweise Sprache, Musik oder Töne erzeugen.

Im Lautsprecherintervall in einem zum Klangintervall zeitversetzten Ultraschallintervall kann der MEMS-Schallwandler die Ultraschallwellen erzeugen. Im Ultraschallintervall kann der MEMS-Schallwandler somit dazu verwendet werden, dass er als Ultraschallnäherungssensor betrieben wird.

Vorteilhafterweise kann sich das Klangintervall und das Ultraschallintervall zumindest einmal abwechseln. Das Klangintervall und das Ultraschallintervall können sich somit zumindest einmal im Lautsprecherintervall abwechseln.

Des Weiteren ist es von Vorteil, wenn die Ultraschallwellen zum Messen des Abstands und die Schallwellen des hörbaren Wellenlängenbereichs gleichzeitig erzeugt werden. Da die Ultraschallwellen zum Messen des Abstands in einen Frequenzbereich von beispielsweise 40 kHz bis 150 kHz liegen können, sind diese für das menschliche Gehör nicht wahrnehmbar, so dass es bei gleichzeitiger Erzeugung von Ultraschallwellen und den Schallwellen des hörbaren Wellenlängenbereichs nicht zu einer Beeinträchtigung der Musik, der Töne und/oder der Sprache kommt. Dadurch kann der Abstand zwischen dem Objekt und dem MEMS-Schallwandler kontinuierlich gemessen werden. Die Ultraschallwellen können beispielsweise zu den Schallwellen des hörbaren Wellenlängenbereichs, die die Musik, die Töne und/oder die Sprache umfassen, aufmoduliert werden. Dadurch können die Schallwellen des hörbaren Wellenlängenbereichs und die Ultraschallwellen gleichzeitig erzeugt werden.

Vorteilhaft ist es auch, wenn die Lautsprechereinheit zumindest einen Lautsprecherverstärker umfasst, der ein Audiosignal bearbeitet und das Audiosignal zumindest während des Lautsprecherintervalls an den MEMS-Schallwandler schickt. Mit Hilfe des Lautsprecherverstärkers kann das Audiosignal beispielsweise verstärkt werden, so dass es am MEMS-Schallwandler in Schallwellen umgesetzt werden kann. Zusätzlich oder alternativ kann der Lautsprecherverstärker das Audiosignal auch derart modifizieren, dass der MEMS-Schallwandler dazu ein vorgesehenes Tonsignal erzeugt. Da der Lautsprecherverstärker lediglich das Audiosignal verstärkt und/oder bearbeitet kann, kann er darauf ausgelegt und optimiert werden.

Von Vorteil ist es ebenfalls, wenn die Lautsprechereinheit zumindest einen Mikrofonverstärker umfasst, der zumindest während des Mikrofonintervalls ein Schallsignal vom MEMS-Schallwandler empfängt und das Schallsignal bearbeitet. Der Mikrofonverstärker kann insbesondere Sprache, Töne oder Musik vom MEMS-Schallwandler empfangen und bearbeiten. Zusätzlich oder alternativ kann der Mikrofonverstärker auch das vom Objekt reflektierte Testsignal erhalten, so dass daraus der Abstand zwischen dem MEMS-Schallwandler und dem Objekt berechnet werden kann. Da der Mikrofonverstärker lediglich das Schallsignal verstärkt und/oder bearbeitet, kann er darauf ausgelegt und optimiert werden.

Vorteilhafterweise kann ein im Schallsignal enthaltenes Klangsignal von einem ersten Mikrofonverstärker und ein im Schallsignal enthaltenes Abstandssignal von einem zweiten Mikrofonverstärker empfangen und verstärkt werden. Das Abstandssignal kann beispielsweise das reflektierte Testsignal sein, dass zur Abstandsmessung vom MEMS-Schallwandler ausgesendet und am Objekt reflektiert wurde. Dadurch, dass die Lautsprechereinheit zwei Mikrofonverstärker umfasst, kann jeder auf seine Aufgabe spezialisiert werden. Der erste Mikrofonverstärker kann dazu benutzt werden, die Klangsignale zu verstärken und zu bearbeiten, die insbesondere Musik, Ton und/oder Sprache umfassen und somit im hörbaren Wellenlängenbereich liegen.

Der zweite Mikrofonverstärker kann dazu benutzt werden, das Abstandssignal zu verstärken und zu bearbeiten, das im Ultraschallbereich liegt.

Da das Abstandssignal im Ultraschallbereich und das Klangsignal im hörbaren Wellenlängenbereich liegt, weist das Abstandssignal eine höhere Frequenz als das Klangsignal auf. Nachdem das Abstandssignal und das Klangsignal vom MEMS-Schallwandler erfasst sind, weisen die dazugehörigen elektrischen Signale ebenfalls eine unterschiedliche Frequenz auf. Das zum Abstandssignal gehörende elektrische Signal weist ebenfalls eine höhere Frequenz auf als das zum Klangsignal gehörende elektrische Signal. Es ist vorteilhaft, wenn die Lautsprechereinheit eine Frequenzweiche aufweist, die aus dem Schallsignal das Klangsignal filtert und an den ersten Mikrofonverstärker schickt. Zusätzlich oder alternativ kann die Frequenzweiche das Abstandssignal aus dem Schallsignal filtern und an den zweiten Mikrofonverstärker schicken. Die Frequenzweiche kann auch das Klangsignal vom Abstandssignal trennen, so dass das Klangsignal zum ersten Mikrofonverstärker und das Abstandssignal zum zweiten Mikrofonverstärker geführt werden kann.

Von Vorteil ist es, wenn das Klangsignal vom ersten Mikrofonverstärker zu einer ersten Verarbeitungseinheit geleitet wird, die das Klangsignal digitalisiert und/oder filtert. Zusätzlich oder alternativ kann das Abstandssignal vom zweiten Mikrofonverstärker zu einer zweiten Verarbeitungseinheit geleitet werden, die das Abstandsignal digitalisiert und/oder filtert. Dadurch können das Klangsignal und/oder das Abstandssignal für eine weitere Verarbeitung aufbereitet werden. Beispielsweise kann das Klangsignal auf einem Speicher abgespeichert oder über Internet oder einen ähnlichen Übertragungsweg, welcher beispielsweise zum Telefonieren üblich ist, verschickt werden. Das Abstandssignal kann derart weiterverarbeitet werden, dass der Abstand zwischen MEMS-Schallwandler und Objekt ermittelt werden kann.

Vorteilhaft ist es, wenn die Steuereinheit eine Schalteinheit der Lautsprechereinheit derart steuert, dass während des Lautsprecherintervalls eine Verbindung zwischen dem Lautsprecherverstärker und dem MEMS-Schallwandler hergestellt wird. Dadurch können Fehlfunktionen verhindert werden. Beispielsweise ist damit verhindert, dass während des Lautsprecherintervalls der MEMS-Schallwandler Schallwellen erfasst und an einen Mikrofonverstärker übermittelt.

Zusätzlich oder alternativ ist es von Vorteil, wenn während des Mikrofonintervalls eine Verbindung zwischen dem MEMS-Schallwandler und dem zumindest einen Mikrofonverstärker hergestellt wird. Dadurch kann verhindert werden, dass während des Mikrofonintervalls durch den MEMS-Schallwandler Schallwellen erzeugt werden.

Von Vorteil ist es, wenn eine Zyklusdauer des Lautsprecherintervalls und des Mikrofonintervalls zusammen zwischen 0,1 µs (Mikrosekunden) und 20 ms (Millisekunden) dauert. Dabei kann die Zyklusdauer auch zwischen 0,5 µs und 5 ms dauern. Dadurch kann der MEMS-Schallwandler ausreichend lang als Lautsprecher und/oder als Mikrofon betrieben werden.

Zusätzlich oder alternativ ist es von Vorteil, wenn die Dauer des Lautsprecherintervalls zur Dauer des Mikrofonintervalls ein Verhältnis zwischen 0,2 und 5000 aufweist. Das Verhältnis ist dabei die Dauer des Lautsprecherintervalls geteilt durch die Dauer des Mikrofonintervalls. Das Verhältnis kann aber auch zwischen 0,2 und 2500 liegen. Das Verhältnis kann aber auch 1 sein, so dass die Dauer des Lautsprecherintervalls und die Dauer des Mikrofonintervalls gleich sind. Dadurch kann ausreichend schnell zwischen dem Lautsprecherintervall und dem Mikrofonintervall gewechselt werden. Hohe Verhältnisse, beispielsweise 1000, können zustande kommen, wenn die Lautsprechereinheit hauptsächlich zum Erzeugen von Musik, Töne und/oder Sprache benutzt wird und während dem Mikrofonintervall nur kurz Schallwellen erfasst werden. Der MEMS-Schallwandler wird beispielsweise nur kurz als Mikrofon betrieben, um beispielsweise erkennen zu können, ob der Benutzer der Lautsprechereinheit zu sprechen begonnen hat, weil er beispielsweise einen Sprachbefehl gegeben oder zu telefonieren begonnen hat, wenn die Lautsprechereinheit beispielsweise in einem Smartphone angeordnet ist. Ist keine Sprache erfasst worden, kann wieder in das Lautsprecherintervall gewechselt werden, wobei beispielsweise das Verhältnis von 1000 beibehalten wird. Ist dagegen Sprache erfasst worden, kann das Verhältnis, von beispielsweise 1000, verringert werden, so dass das Mikrofonintervall verlängert wird. Das Mikrofon kann auch dazu aktiviert werden, um die vom Objekt reflektierten Ultraschallwellen erfassen zu können, um den Abstand zu ermitteln.

Vorteilhaft ist es auch, wenn der MEMS-Schallwandler zwischen dem Betrieb als Lautsprecher nur so lange als Mikrofon betrieben wird, dass der Eindruck entsteht, dass der MEMS-Schallwandler durchgehend als Lautsprecher betrieben wird.

Vorteilhaft ist es, wenn die Dauer des Klangintervalls zur Dauer des Ultraschallintervalls ein Verhältnis zwischen 10 und 5000 aufweist. Das Verhältnis kann aber auch zwischen 50 und 2500 liegen. Das Verhältnis ist dabei die Dauer des Klangintervalls geteilt durch die Dauer des Ultraschallintervalls. Da während des Ultraschallintervalls der Ultraschall erzeugt wird und der Ultraschall eine im Vergleich zu hörbaren Schall hohe Frequenz aufweist, kann das Ultraschallintervall eine entsprechend kürzere Dauer aufweisen. Außerdem wird während des Ultraschallintervalls lediglich das Testsignal zur Abstandsmessung zwischen dem MEMS-Schallwandler und dem Objekt erzeugt. Zur Abstandsmessung genügt ein relativ kurzes Testsignal im Vergleich zum Erzeugen der hörbaren Schallwellen, die Musik, Ton oder Sprache übermitteln.

Von Vorteil ist es, wenn mittels des MEMS-Schallwandlers derartiger Ultraschall erzeugt wird, dass ein haptischer Eindruck mit Hilfe der Ultraschallwellen ausgebildet wird. Mit Hilfe der Ultraschallwellen kann somit der Eindruck eines Gegenstands gebildet werden. Die Ultraschallwellen können beispielsweise in eine Richtung abgestrahlt und/oder derart moduliert werden, dass ein Druck und/oder ein Zug beispielsweise auf eine Hand eines Anwenders der Lautsprechereinheit ausgebildet wird. Der Anwender kann dadurch den mittels der Ultraschallwellen erzeugten Gegenstand erfühlen. Ein derartiges Verfahren wird als Ultrahaptics bezeichnet.

Vorteilhaft ist es auch, wenn mittels einer Auswerteinheit das Abstandssignal ausgewertet wird, so dass ein Abstandsprofil ermittelt wird. Aus dem Abstandsprofil kann beispielsweise eine Form des Objekts, zu dem der Abstand gemessen ist, ermittelt werden. Zusätzlich oder alternativ können Gesten erkannt werden. Dadurch kann beispielsweise eine Wischbewegung eines Anwenders erkannt werden, um eine Aktion auszuführen. Ist die Lautsprechereinheit beispielsweise in einem Smartphone angeordnet, kann mittels der Erkennung der Geste das Smartphone aktiviert werden. Aus dem Abstandsprofil kann beispielsweise auch ermittelt werden, dass das Smartphone an ein Ohr des Anwenders bewegt wird, so dass Funktionen des Smartphones und insbesondere der Lautsprechereinheit derart eingestellt werden, dass damit telefoniert werden kann.

Vorgeschlagen wird ferner eine Lautsprechereinheit, die beispielsweise für ein tragbares Gerät verwendet werden kann. Die Lautsprechereinheit umfasst einen MEMS-Schallwandler zum Erzeugen von Schallwellen im hörbaren Wellenlängenbereich. Der MEMS-Schallwandler kann somit als Lautsprecher betrieben werden. Zusätzlich oder alternativ kann der MEMS-Schallwandler auch Schallwellen im hörbaren Wellenlängenbereich erfassen, so dass der MEMS-Schallwandler als Mikrofon betrieben werden kann.

Der MEMS-Schallwandler kann dabei derart ausgebildet sein, dass mit diesem zusätzlich Schallwellen im Ultraschallbereich erzeugbar und erfassbar sind.

Ferner weist die Lautsprechereinheit eine Steuereinheit auf, mittels der der MEMS-Schallwandler nach einen oder mehreren Verfahrensschritten der vorangegangenen und/oder nachfolgenden Beschreibung als Ultraschallnäherungssensor betrieben werden kann.

Mit Hilfe des MEMS-Schallwandlers kann somit ein Abstand zwischen ihm selbst und einem Objekt in der Umgebung der Lautsprechereinheit ermittelt werden.

Weitere Vorteile der Erfindung sind in den nachfolgenden Ausführungsbeispielen beschrieben. Es zeigen:
- **Figur 1**: eine Blockdiagramm einer Lautsprechereinheit,
- **Figur 2**: eine Blockdiagramm einer Lautsprechereinheit in einem alternativen Ausführungsbeispiel und
- **Figur 3**: ein Zeitdiagramm der Betriebszustände der Lautsprechereinheit.

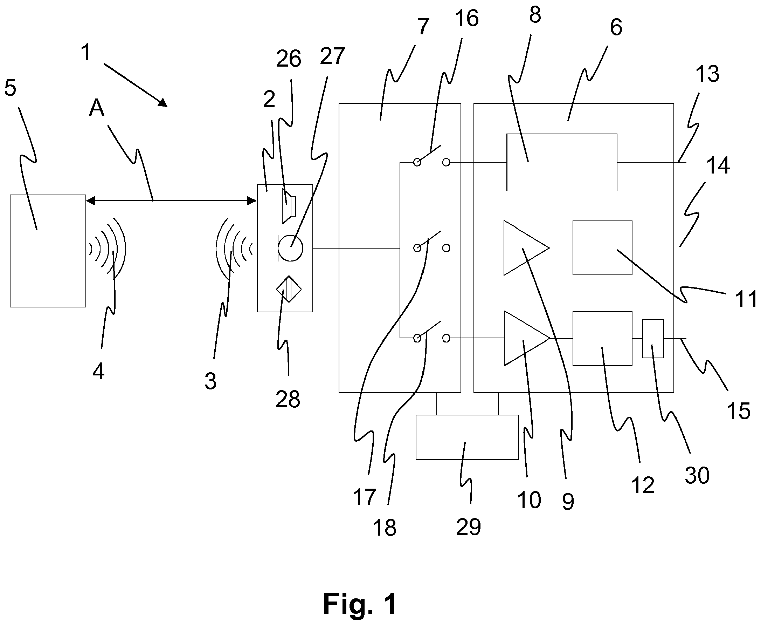

Figur 1 zeigt ein Blockdiagramm einer Lautsprechereinheit 1. Die Lautsprechereinheit 1 umfasst einen MEMS-Schallwandler 2, mittels dem beim Betrieb der Lautsprechereinheit 1 Schallwellen 3, 4 erzeugt und erfasst werden können. Die Lautsprechereinheit 1 kann somit eine Schallwandlereinheit sein. Die Lautsprechereinheit 1 kann beispielsweise in einem tragbaren Gerät, wie beispielsweise einem Smartphone, einem Tablet oder ähnlichem, angeordnet sein, um Musik, Sprache oder Töne abspielen zu können. Der MEMS-Schallwandler 2 kann somit als Lautsprecher 26 betrieben werden. Mit Hilfe des MEMS-Schallwandlers 2 kann aber auch eine Sprache, Töne oder Musik aufgenommen werden, so dass der MEMS-Schallwandler 2 als Mikrofon 27 betrieben wird. Mit Hilfe der Lautsprechereinheit 1 beispielsweise in einem Smartphone, kann somit zum Beispiel telefoniert werden.

Ferner kann der MEMS-Schallwandler 2 zusätzlich als Ultraschallnäherungssensor 28 betrieben werden, um einen Abstand A zwischen sich und einem Objekt 5 messen zu können. Der MEMS-Schallwandler 2 kann dazu Ultraschallwellen aussenden, die vom Objekt 5 reflektiert und zurück zum MEMS-Schallwandler 2 gelangen, durch den sie erfasst werden. Anhand einer Laufzeit der Ultraschallwellen kann der Abstand A zwischen dem Objekt 5 und dem MEMS-Schallwandler 2 ermittelt werden.

Gemäß dem vorliegenden Ausführungsbeispiel weist die Lautsprechereinheit 1 eine Bearbeitungseinheit 6 auf, die beispielsweise ein Audiosignal für den MEMS-Schallwandler 2 zum Abspielen aufbereiten kann. Zusätzlich oder alternativ kann die Bearbeitungseinheit 6 auch die vom MEMS-Schallwandler 2 erfassten Schallwellen aufbereiten.

Ferner weist die Lautsprechereinheit 1 einen Lautsprecherverstärker 8 auf. Der Lautsprecherverstärker 8 ist im vorliegenden Ausführungsbeispiel der Figur 1 in der Bearbeitungseinheit 6 angeordnet. Mit Hilfe des Lautsprecherverstärkers 8 kann das zur Ausgabe am MEMS-Schallwandler 2 bestimmte Audiosignal verstärkt und/oder bearbeitet werden.

Des Weiteren kann die Lautsprechereinheit 1 zumindest einen Mikrofonverstärker 9, 10 aufweisen. Mittels des zumindest einen Mikrofonverstärkers 9, 10 können die vom MEMS-Schallwandler 2 erfasste Schallwellen verstärkt und/oder bearbeitet werden. Der zumindest eine Mikrofonverstärker 9, 10 ist im Ausführungsbeispiel der Figur 1 in der Bearbeitungseinheit 6 angeordnet.

Gemäß dem vorliegenden Ausführungsbeispiel weist die Lautsprechereinheit 1 einen ersten und einen zweiten Mikrofonverstärker 9, 10 auf. Einer der beiden Mikrofonverstärker 9, 10 kann dazu ausgebildet sein, ein in den erfassten Schallwellen enthaltenes Klangsignal zu verstärken und/oder zu bearbeiten. Das Klangsignal kann dabei beispielsweise Sprache, Töne und/oder Musik umfassen. Das Klangsignal umfasst somit hörbare Schallwellen bzw. umfasst ein elektrisches Signal, dass die hörbaren Schallwellen aufweist.

Der andere Mikrofonverstärker 9, 10 kann dazu ausgebildet sein, ein in den erfassten Schallwellen enthaltenes Abstandssignal zu verstärken und/oder zu bearbeiten. Da der MEMS-Schallwandler 2 zur Ermittlung des Abstands A Ultraschallwellen aussendet, weisen die erfassten Schallwellen ebenfalls Ultraschallwellen auf, anhand derer der Abstand 5 ermittelt wird. Der hier besagte Mikrofonverstärker 9, 10 kann somit die in den erfassten Schallwellen enthaltenen Ultraschallwellen verstärken und/oder bearbeiten.

Des Weiteren kann die Lautsprechereinheit 1 zumindest eine Verarbeitungseinheit 11, 12 aufweisen. Mit Hilfe der zumindest einen Verarbeitungseinheit 11, 12 können die Schallsignale, insbesondere die Klangsignale und/oder das Abstandssignal, bearbeitet werden. Die Schallsignale können dabei von der zumindest einen Verarbeitungseinheit 11, 12 beispielsweise digitalisiert und/oder gefiltert werden.

Gemäß dem vorliegenden Ausführungsbeispiel der Figur 1 weist die Lautsprechereinheit 1 zwei Verarbeitungseinheiten 11, 12 auf. Die erste Verarbeitungseinheit 11 kann dem ersten Mikrofonverstärker 9 nachgeschaltet sein. Das vom ersten Mikrofonverstärker 9 bearbeitete bzw. verstärkte Schallsignal, insbesondere das Klangsignal, kann somit zur ersten Verarbeitungseinheit 11 geleitet werden. Die zweite Verarbeitungseinheit 12 kann dem zweiten Mikrofonverstärker 10 nachgeschaltet sein. Das vom zweiten Mikrofonverstärker 10 bearbeitete bzw. verstärkte Schallsignal, insbesondere das Abstandssignal, kann somit zur zweiten Verstärkereinheit 12 geleitet werden.

Die Lautsprechereinheit 1 weist vorteilhafterweise zumindest einen Eingang 13 auf, über den beispielsweise ein Audiosignal zum Erzeugen von entsprechenden Schallwellen dem MEMS-Schallwandler 2 zugeführt werden kann.

Zusätzlich oder alternativ ist es von Vorteil, wenn die Lautsprechereinheit 1 zumindest einen Ausgang 14, 15 aufweist. Die Lautsprechereinheit 1 gemäß dem vorliegenden Ausführungsbeispiel weist zwei Ausgänge 14, 15 auf. Der erste Ausgang 14 ist mit der ersten Verarbeitungseinheit 11 und über diese mit dem ersten Mikrofonverstärker 9 verbunden. Alternativ kann der erste Ausgang 14 auch direkt mit dem ersten Mikrofonverstärker 9 verbunden sein. Über den ersten Ausgang 14 kann somit das Klangsignal ausgeleitet werden. Das Klangsignal kann somit beispielsweise abgespeichert oder weitergeleitet werden. Das Klangsignal kann dann beispielsweise zu einem Gesprächspartner versendet werden, wenn die Lautsprechereinheit 1 in einem Smartphone bzw. einem Telefon angeordnet ist und dafür benutzt wird.

Zusätzlich weist die Lautsprechereinheit 1 den zweiten Ausgang 15 auf, über den das Abstandssignal aus der Lautsprechereinheit 1 ausgeleitet werden kann. Das Abstandssignal kann dann zu einer weiteren Einheit geleitet werden. Das Abstandssignal kann beispielsweise im Smartphone weiterverarbeitet werden. Dem zweiten Ausgang 15 kann auch eine hier nicht gezeigte Auswerteeinheit nachgeordnet sein, die das Abstandssignal auswertet.

Außerdem weist die Lautsprechereinheit 1 gemäß dem vorliegenden Ausführungsbeispiel eine Schalteinheit 7 auf, mittels der eine Verbindung zwischen dem MEMS-Schallwandler 2 und der Bearbeitungseinheit 6 hergestellt werden kann. Mittels der Schalteinheit 7 kann im vorliegenden Ausführungsbeispiel ferner eine Verbindung zwischen dem MEMS-Schallwandler 2 und dem Lautsprecherverstärker 8 und/oder dem ersten und/oder dem zweiten Mikrofonverstärker 9, 10 ausgebildet werden. Alternativ kann auch eine Verbindung zwischen dem MEMS-Schallwandler 2 und der ersten und/oder zweiten Verarbeitungseinheit 11, 12 ausgebildet werden.

Gemäß dem vorliegenden Ausführungsbeispiel weist die Schalteinheit 7 zumindest einen Schalter 16-18 auf, mit dem eine Verbindung zwischen dem MEMS-Schallwandler 2 und der Bearbeitungseinheit 6 ausgebildet werden kann. Die Schalteinheit 7 der Figur 1 weist drei Schalter 16 - 18 auf.

Mit Hilfe des ersten Schalters 16 kann im vorliegenden Ausführungsbeispiel eine Verbindung zwischen dem MEMS-Schallwandler 2 und dem Lautsprecherverstärker 8 ausgebildet werden, so dass das Audiosignal zur Ausgabe zum MEMS-Schallwandler 2 geleitet werden kann.

Zusätzlich oder alternativ weist die Schalteinheit 7 einen zweiten Schalter 17 auf, mittels dem im vorliegenden Ausführungsbeispiel eine Verbindung zwischen dem MEMS-Schallwandler 2 und dem ersten Mikrofonverstärker 9 ausgebildet werden kann. Zusätzlich oder alternativ kann mit Hilfe des zweiten Schalters 17 auch eine Verbindung zwischen dem MEMS-Schallwandler 2 und der ersten Verarbeitungseinheit 11 ausgebildet werden.

Zusätzlich oder alternativ weist die Schalteinheit 7 einen dritten Schalter 18 auf, mittels dem im vorliegenden Ausführungsbeispiel eine Verbindung zwischen dem MEMS-Schallwandler 2 und dem zweiten Mikrofonverstärker 10 ausgebildet werden. Zusätzlich oder alternativ kann mit Hilfe des dritten Schalters 18 auch eine Verbindung zwischen dem MEMS-Schallwandler 2 und der zweiten Verarbeitungseinheit 12 ausgebildet werden.

Die drei Schalter 16 - 18 des vorliegenden Ausführungsbeispiels können dabei unabhängig voneinander geöffnet und geschlossen werden. Das heißt, es kann zu jeder Zeit lediglich ein Schalter 16 - 18 geschlossen sein, wohingegen die anderen beiden geöffnet sind. Alternativ können auch zwei Schalter 16 - 18, wobei der entsprechend übrige Schalter 16 - 18 geöffnet ist, oder alle drei Schalter 16-18 geschlossen sein. Alternativ können auch alle drei Schalter 16 - 18 geöffnet sein.

Des Weiteren kann die Lautsprechereinheit 1 eine Steuereinheit 29 umfassen. Die Steuereinheit 29 kann gemäß dem vorliegenden Ausführungsbeispiel mit der Schalteinheit 7 verbunden sein. Zusätzlich oder alternativ kann, wie im vorliegenden Ausführungsbeispiel gezeigt ist, die Steuereinheit 29 auch mit der Bearbeitungseinheit 6 verbunden sein. Die Steuereinheit 29 kann beispielsweise zumindest einen der Schalter 16 - 18 der Schalteinheit 7 schalten. Zusätzlich oder alternativ kann die Steuereinheit 29 auch den Lautsprecherverstärker 6, zumindest einen der Mikrofonverstärker 9, 10 und/oder zumindest eine Verarbeitungseinheit 11, 12 der Bearbeitungseinheit steuern.

Außerdem weist die Lautsprechereinheit 1 des vorliegenden Ausführungsbeispiels eine Auswerteeinheit 30 auf. Mit der Auswerteeinheit 30 kann der Abstand A, eine zeitliche Änderung des Abstands A und/oder ein Abstandsprofil ausgewertet werden, um beispielsweise Gesten oder eine Form des Objekts 5 erkennen zu können. Dadurch können beispielsweise Wischbewegung über dem MEMS-Schallwandler 2 erkannt werden, so dass eine entsprechende Handlung ausgeführt wird. Beispielsweise kann mit der Wischbewegung ein Smartphone aktiviert werden, wenn die Lautsprechereinheit 1 und der MEMS-Schallwandler 2 in einem Smartphone angeordnet sind.

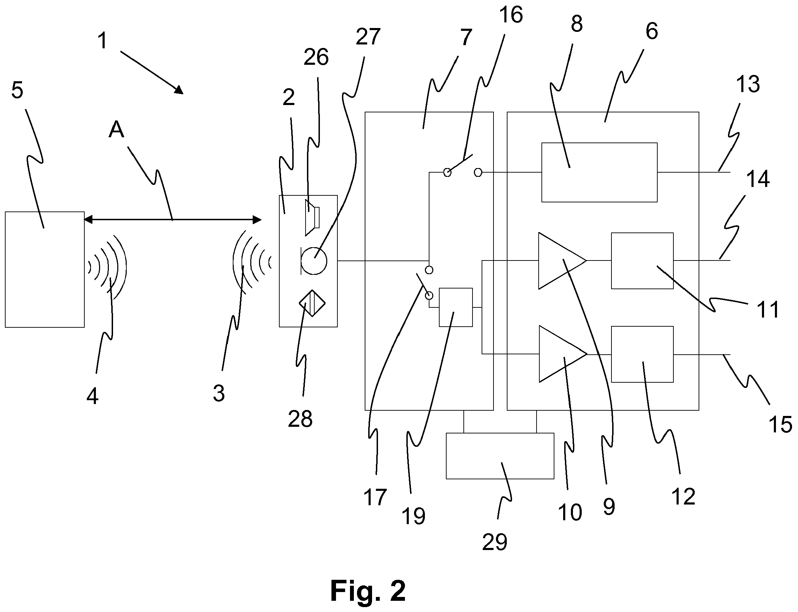

Figur 2 zeigt ein Blockdiagramm einer Lautsprechereinheit 1 gemäß einem alternativen Ausführungsbeispiel. Der Einfachheit halber wird auf die zur Figur 1 gleichen Merkmale nicht nochmals eingegangen.

Die Schalteinheit 7 der Lautsprechereinheit 1 weist gemäß dem vorliegenden Ausführungsbeispiel zumindest einen Schalter 16, 17 sowie eine Frequenzweiche 19 auf. Der erste Schalter 16 verbindet den MEMS-Schallwandler 2 mit dem Lautsprecherverstärker 8, so dass das zur Ausgabe vorgesehene Audiosignal, das vom Lautsprecherverstärker 8 verstärkt und/oder bearbeitet werden kann, zum MEMS-Schallwandler 2 geleitet werden kann.

Mit Hilfe des zweiten Schalters 17 kann eine Verbindung zwischen dem MEMS-Schallwandler 2 und der Frequenzweiche 19 ausgebildet werden. Die Frequenzweiche 19 ist ferner mit dem ersten und dem zweiten Mikrofonverstärker 9, 10 verbunden, so dass über die Frequenzweiche 19 das vom MEMS-Schallwandler 2 erfasste Schallsignal zu den beiden Mikrofonverstärkern 9, 10 geleitet werden kann. Die Frequenzweiche 19 kann dabei derart ausgebildet sein, dass das Klangsignal, welches Frequenzen im hörbaren Wellenlängenspektrum aufweist, zum ersten Mikrofonverstärker 9 geleitet wird und dass das Abstandssignal, welches Frequenzen im Ultraschallbereich aufweist, zum zweiten Mikrofonverstärker 10 geleitet wird. Die Frequenzweiche 19 kann dazu beispielsweise eine Anordnung aus Hochpässen, Tiefpässen und/oder Bandpässen aufweisen. Dadurch kann auf einfache Weise aus dem Schallsignal das Klangsignal und das Abstandssignal voneinander getrennt werden.

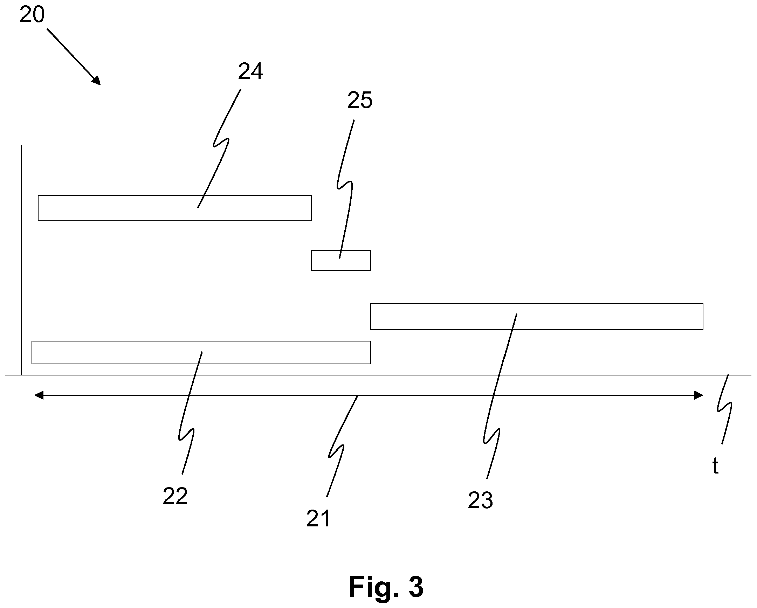

Figur 3 zeigt ein Zeitdiagramm 20 von Betriebszuständen der Lautsprechereinheit 1. Auf der x-Achse ist die Zeit t und entlang der y-Achse sind die verschiedenen Intervalle aufgetragen.

Das Zeitdiagramm 20 weist eine Periode 21 auf, welche eine Taktzeit darstellen kann, gemäß der die Lautsprechereinheit 1 betrieben werden kann. Die Periode 21 kann sich dabei wiederholen und eine konstante Zeitdauer aufweisen. Beispielsweise kann die Periode 21 zwischen 0,1 µs und 10 ms dauern. Alternativ kann die Periode 21 aber auch zwischen 0,5 µs und 5 ms dauern. Dabei kann die Zeitdauer einer Periode 21 konstant oder variabel sein. Beispielsweise können zwei aufeinanderfolgende Perioden 21 eine unterschiedliche Zeitdauer aufweisen.

Eine Periode 21 kann des Weiteren in ein Lautsprecherintervall 22 und ein Mikrofonintervall 23 unterteilt sein. Im vorliegenden Zeitdiagramm der Figur 3 folgt das Mikrofonintervall 23 auf das Lautsprecherintervall 22. Alternativ kann aber auch das Lautsprecherintervall 22 auf das Mikrofonintervall 23 folgen.

Im Lautsprecherintervall 22 wird die Lautsprechereinheit 1 als Lautsprecher 26 betrieben. Das heißt, während dem Lautsprecherintervall 22 wird der MEMS-Schallwandler 2 zum Erzeugen von Schallwellen 3 betrieben. Während des Lautsprecherintervalls 22 können somit Klänge, Töne und Sprache erzeugt werden. Zusätzlich können während dem Lautsprecherintervall 22 die Ultraschallwellen zum Messen des Abstands A erzeugt werden. Vorteilhafterweise kann während dem Lautsprecherintervall 22 der MEMS-Schallwandler 2 mit dem Lautsprecherverstärker 8 verbunden sein, so dass das zur Ausgabe durch den MEMS-Schallwandler 2 vorgesehene Audiosignal zu diesem geleitet werden kann. Durch den Lautsprecherverstärker 8 kann das Audiosignal bearbeitet und/oder verstärkt werden.

In dem Mikrofonintervall 23 kann die Lautsprechereinheit 1 derart betrieben werden, dass Schallwellen erfasst werden können. Während dem Mikrofonintervall 23 kann somit der MEMS-Schallwandler 2 derart betrieben werden, dass Schallwellen aus der Umgebung der Lautsprechereinheit 1 erfasst werden. Der MEMS-Schallwandler 2 wird im Mikrofonintervall 23 als Mikrofon 27 betrieben. Die erfassten Schallwellen können beispielsweise in Form des Schallsignals zu zumindest einem Mikrofonverstärker 9, 10 geleitet werden. Durch den zumindest einen Mikrofonverstärker 9, 10 kann das Schallsignal verstärkt und/oder bearbeitet werden. Um das Schallsignal zu dem zumindest einen Mikrofonverstärker 9, 10 zu leiten, kann die Schalteinheit 7 entsprechend schalten. Beispielsweise kann der zweite Schalter 17 und/oder der dritte Schalter 18 geschlossen werden, um das Schallsignal zu dem entsprechenden Mikrofonverstärker 9, 10 zu leiten. Während des Mikrofonintervalls 23 können auch die vom Objekt 5 reflektierten Ultraschallwellen erfasst werden und zum entsprechenden Mikrofonverstärker 9, 10 geleitet werden.

Gemäß dem vorliegenden Ausführungsbeispiel des Verfahrens zum Betreiben der Lautsprechereinheit 1 kann das Lautsprecherintervall 22 ein Klangintervall 24 und ein Ultraschallintervall 25 aufweisen. Dabei folgt das Ultraschallintervall 25 auf das Klangintervall 24. Alternativ kann auch zuerst das Ultraschallintervall 25 angeordnet sein und das Klangintervall 24 kann zeitlich darauf folgen.

Während dem Klangintervall 24 kann der MEMS-Schallwandler 2 derart betrieben werden, dass Schallwellen im hörbaren Wellenspektrumsbereich, wie beispielsweise Musik, Ton und/oder Sprache, erzeugt werden. Während des Ultraschallintervalls 25 kann der MEMS-Schallwandler 2 derart betrieben werden, dass Ultraschallwellen und/oder das Ultraschallsignal erzeugt wird, um den Abstand A zwischen dem Objekt 5 und dem MEMS-Schallwandler 2 zu messen.

Vorteilhaft ist dabei, wenn auf das Ultraschallintervall 25 das Mikrofonintervall 23 folgt. Dadurch können die während dem Ultraschallintervall 25 ausgesendeten Ultraschallwellen und am Objekt 5 reflektierten Schallwellen 4 während dem Mikrofonintervall 23 erfasst werden. Aus einem zeitlichen Abstand zwischen dem Aussenden der Ultraschallwellen und dem Erfassen der am Objekt 5 reflektierten Schallwellen 4 kann der Abstand A zwischen dem MEMS-Schallwandler 2 und dem Objekt 5 ermittelt werden.

Alternativ können die Ultraschallwellen auch zu den Schallwellen im hörbaren Wellenlängenbereich aufmoduliert werden. Die Ultraschallwellen werden somit zur Musik, zu den Tönen und/oder zur Sprache aufmoduliert. Da die Ultraschallwellen höhere Frequenzen als die Musik, die Töne und/oder die Sprache aufweisen, führt diese nicht zu einer Beeinträchtigung der Klangqualität der Musik, der Töne und/oder der Sprache. Dadurch können die Ultraschallwellen gleichzeitig zu den Schallwellen des hörbaren Wellenlängenbereichs während dem Lautsprecherintervall 22 erzeugt werden.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Lautsprechereinheit
- 2: MEMS-Schallwandler
- 3: erzeugte Schallwellen
- 4: reflektierte Schallwellen
- 5: Objekt
- 6: Bearbeitungseinheit
- 7: Schalteinheit
- 8: Lautsprecherverstärker
- 9: erster Mikrofonverstärker
- 10: zweiter Mikrofonverstärker
- 11: erste Verarbeitungseinheit
- 12: zweite Verarbeitungseinheit
- 13: Eingang
- 14: erster Ausgang
- 15: zweiter Ausgang
- 16: erster Schalter
- 17: zweiter Schalter
- 18: dritter Schalter
- 19: Frequenzweiche
- 20: Zeitdiagramm
- 21: Periode
- 22: Lautsprecherintervall
- 23: Mikrofonintervall
- 24: Klangintervall
- 25: Ultraschallintervall
- 26: Lautsprecher
- 27: Mikrofon
- 28: Ultraschallnäherungssensor
- 29: Steuereinheit
- 30: Auswerteeinheit

- A: Abstand
- t: Zeit

## Patentansprüche

1. Verfahren zum Betreiben einer Lautsprechereinheit (1), insbesondere für ein tragbares Gerät, bei welchem mittels eines MEMS-Schallwandlers (2) der Lautsprechereinheit (1) Schallwellen (3, 4) im hörbaren Wellenlängenbereich erzeugt und/oder erfasst werden, **dadurch gekennzeichnet,**
**dass** der MEMS-Schallwandler (2) von einer Steuereinheit (29) der Lautsprechereinheit (1) zusätzlich als Ultraschallnäherungssensor (28) betrieben wird, wobei mit dem MEMS-Schallwandler (2) zum Messen eines Abstands (A) zwischen sich und einem Objekt (5) Ultraschallwellen (3, 4) erzeugt und erfasst werden.

2. Verfahren nach dem vorherigen Anspruch, **dadurch gekennzeichnet, dass** während eines Lautsprecherintervalls (22) der MEMS-Schallwandler (2) als Lautsprecher (26) betrieben wird und/oder dass während eines zum Lautsprecherintervall (22) zeitversetzten Mikrofonintervalls (23) der MEMS-Schallwandler (2) als Mikrofon (27) betrieben wird, wobei sich das Lautsprecherintervall (22) und das Mikrofonintervall (23) vorzugsweise abwechseln.

3. Verfahren nach einem der vorherigen Ansprüche, **dadurch gekennzeichnet, dass** während des Lautsprecherintervalls (22) in einem Klangintervall (24) der MEMS-Schallwandler (2) die hörbaren Schallwellen (3) erzeugt und in einem dazu zeitversetzten Ultraschallintervall (25) die Ultraschallwellen (3) erzeugt, wobei sich das Klangintervall (24) und das Ultraschallintervall (25) zumindest einmal abwechseln.

4. Verfahren nach einem der vorherigen Ansprüche, **dadurch gekennzeichnet, dass** die Ultraschallwellen zum Messen des Abstands und die Schallwellen des hörbaren Wellenlängenbereichs gleichzeitig erzeugt werden.

5. Verfahren nach einem der vorherigen Ansprüche, **dadurch gekennzeichnet, dass** die Lautsprechereinheit (1) zumindest einen Lautsprecherverstärker (8) umfasst, der ein Audiosignal bearbeitet und das Audiosignal zumindest während des Lautsprecherintervalls (22) an den MEMS-Schallwandler (2) schickt.

6. Verfahren nach einem der vorherigen Ansprüche, **dadurch gekennzeichnet, dass** die Lautsprechereinheit (1) zumindest einen Mikrofonverstärker (9, 10) umfasst, der zumindest während des Mikrofonintervalls (23) ein Schallsignal vom MEMS-Schallwandler (2) empfängt und das Schallsignal bearbeitet.

7. Verfahren nach einem der vorherigen Ansprüche, **dadurch gekennzeichnet, dass** ein im Schallsignal enthaltenes Klangsignal von einem ersten Mikrofonverstärker (9) und ein im Schallsignal enthaltenes Abstandssignal vom einem zweiten Mikrofonverstärker (10) empfangen und verstärkt wird.

8. Verfahren nach einem der vorherigen Ansprüche, **dadurch gekennzeichnet, dass** die Lautsprechereinheit (1) eine Frequenzweiche (19) umfasst, die aus dem Schallsignal das Klangsignal filtert und an den ersten Mikrofonverstärker (9) schickt und/oder aus dem Schallsignal das Abstandssignal filtert und an den zweiten Mikrofonverstärker (10) schickt.

9. Verfahren nach einem der vorherigen Ansprüche, **dadurch gekennzeichnet, dass** das Klangsignal vom ersten Mikrofonverstärker (9) zu einer ersten Verarbeitungseinheit (11) geleitet wird, die das Klangsignal digitalisiert und/oder filtert, und/oder
dass das Abstandssignal vom zweiten Mikrofonverstärker (10) zu einer zweite Verarbeitungseinheit (12) geleitet wird, die das Abstandssignal digitalisiert und/oder auswertet.

10. Verfahren nach einem der vorherigen Ansprüche, **dadurch gekennzeichnet, dass** die Steuereinheit (29) eine Schalteinheit (7) der Lautsprechereinheit (1) derart steuert, dass während des Lautsprecherintervalls (22) eine Verbindung zwischen dem Lautsprecherverstärker (8) und dem MEMS-Schallwandler (2) und/oder
während des Mikrofonintervalls (23) eine Verbindung zwischen dem MEMS-Schallwandler (2) und dem zumindest einen Mikrofonverstärker (9, 10) hergestellt wird.

11. Verfahren nach einem der vorherigen Ansprüche, **dadurch gekennzeichnet, dass** eine Periode (21) des Lautsprecherintervalls (22) und des Mikrofonintervalls (23) zusammen zwischen 0,1 µs und 20 ms, insbesondere zwischen 0,5 µs und 5 ms, dauert und/oder
dass die Dauer des Lautsprecherintervalls (22) zur Dauer des Mikrofonintervalls (23) ein Verhältnis zwischen 10 und 5000, insbesondere zwischen 50 und 2500, vorzugsweise 1, aufweist.

12. Verfahren nach einem der vorherigen Ansprüche, **dadurch gekennzeichnet, dass** die Dauer des Klangintervalls (24) zur Dauer des Ultraschallintervalls (25) ein Verhältnis zwischen 10 und 5000, insbesondere zwischen 50 und 2500, aufweist.

13. Verfahren nach einem der vorherigen Ansprüche, **dadurch gekennzeichnet, dass** mittels des MEMS-Schallwandlers (2) derartiger Ultraschall erzeugt wird, dass ein haptischer Eindruck mit Hilfe der Ultraschallwellen ausgebildet wird.

14. Verfahren nach einem der vorherigen Ansprüche, **dadurch gekennzeichnet, dass** mittels einer Auswerteinheit (30) das Abstandssignal ausgewertet wird, so dass ein Abstandsprofil ermittelt wird und/oder Gesten erkannt werden.

15. Lautsprechereinheit (1), insbesondere für ein tragbares Gerät,
mit einem MEMS-Schallwandler (2) zum Erzeugen und/oder Erfassen von Schallwellen im hörbaren Wellenlängenbereich,
**dadurch gekennzeichnet,**
**dass** der MEMS-Schallwandler (2) derart ausgebildet ist, dass mit diesem zusätzlich Ultraschallwellen erzeugbar und erfassbar sind und dass die Lautsprechereinheit (1) eine Steuereinheit (29) aufweist, mittels der der MEMS-Schallwandler (2) nach einem oder mehreren der vorangegangenen Verfahrensansprüche als Ultraschallnäherungssensor (28) betreibbar ist.
